# EUROPEAN PATENT SPECIFICATION

(11) **EP 1 041 525 B1**
(45) Date of publication and mention of the grant of the patent: **19.07.2006**
(21) Application number: 00302754.7
(22) Date of filing: 31.03.2000
(51) Int. Cl.: G07F 17/32

(54) **Game system**
Spielsystem
Système de jeu

(30) Priority: 02.04.1999 JP 9574099
(43) Date of publication of application: 04.10.2000
(73) Proprietor: Konami Corporation, Chiyoda-ku, Tokyo 100-6330 (JP)
(72) Inventor: Kusuda, Kazuhiro, Hiratsuka-shi, Kanagawa-ken (JP); Ando, Takuya, Kawasaki-shi, Kanagawa-ken (JP)
(74) Representative: Haley, Stephen

(56) References cited:
- EP-A- 0 307 925
- EP-A- 0 360 613
- US-A- 4 268 744

## Description

The present invention relates to a game system which pays for recreation value according to progress of a game.

In a medal game machine which is installed in a game center or the like, the continuity of a suspended game cannot be obtained. For example, in the case where a player plays a game in a specified game machine and comes back to the game machine a few days later, the previous game is not related to this game in progress of the game, and this game is not influenced by the result of the previous game.

In a conventional medal game machine, while a game is continued, a player cannot leave the game machine. For this reason, it was difficult to apply such a medal game machine to a field of a game where a player enjoys a game which continues for hours and enjoys a process of a change in a parameter of an object according to player's operation, such as a horse raising game in horse racing where a player's horse is trained and its ability is changed so as to be raised. Moreover, in order to improve appeals of games in medal game machines, it is greatly desired to provide a medal game machine which can ensure continuity of a suspended game. Examples of prior art systems can be found in EP-A-0360613 and US-A-4575622.

It is an object of the present invention to provide a game system which can ensure continuity of a game. Accordingly, the present invention provides a game system for paying for recreating value according to progress of a game, comprising:
a plurality of recording mediums, each of said recording mediums containing unique code information; and
a game machine, said recording mediums being detachably connectable to said game machine, said game machine having reading means for reading the code information in each of said recording mediums when said recording mediums are coupled to said game machine, the game machine comprising;
storage means for storing a state and a history of suspended games each in association with the code information in respective one of said recording mediums;
stations for accepting input operations by players;
game progress means for progressing a game in accordance with the input operations accepted by said stations; and
paying means for paying for recreation value according to the progress of the game in said game progress means,
the game system being characterised in that:
   said recording mediums are separate and apart from said storage means, and
   said game progress means restarts a suspended game using the state and history of the suspended game stored in said storage means when said reading means read the code information on a respective one of said recording mediums associated with the suspended game.

Preferably, said game machine further comprises writing means for writing information into said recording mediums,
wherein said writing means writes the code specifying information into each of said recording mediums at the time of suspension of the game.

Preferably, said writing means rewrites the code information in the recording mediums at the time of suspension of the game.

Preferably, said arcade machine further comprises:
collating means for collating the code information stored in said recording mediums and in said storage means; and
code information creating means for creating the code information based on the internal information in said game system,
wherein said writing means writes the code information created by said code information creating means into said recording mediums; and
the code information created by said code information creating means is stored in said storage means.

Preferably, said game machine further comprises:
a common field for progressing the game;
said stations being arranged to accept input operations by a player relating to the game progressed in said common field.

Preferably, said reading means is provided to each of said stations.

Preferably, said storage means includes
a first storage device provided to each of said stations, for temporarily storing the state and history of the game generated according to the input operations, and
a second storage device for updating the old state and history of the game by means of the state and history of the game stored in said first storage device.

Preferably, said game progress means reads the corresponding state and history of the game from said second storage device into said first storage device based on the code information read by said reading means, and continuously progress the game using the state and history of the game read into said first storage device.

Preferably, the state and history of the game include final play information regarding the last time the game was played; and
wherein the older states and histories of games stored in said storage means take priority in a deletion process based on the final play information.

Preferably, the state and history of the game include raising results of an object to be raised by the player on the game.

Preferably, the state and history of the game include the raising results of an object to be raised by the player on the game; and
the object to be raised participates in a race on the game, and the object displays its ability in the race according to the raised results.

Preferably,
the state and history of the game include raised results of an object to be raised by the player in the station; and
the object to be raised participates in a race on the game in the common field, and the object displays its ability in the race according to the raised results.

Preferably, the object to be raised is a race horse on the game, and the object is nominated for the race in the common field.

Preferably, the game system further comprises:
a first game machine as the game machine;
a second game machine as another game machine;
each of said recording mediums being detachably connectable to said first and second game machines;
communication means for connecting said second game machine and storage means arranged in said first game machine,
wherein said first and second game machines are each provided with: the reading means; the stations; the game progress means; and the pay means;
wherein
said recording medium are separate and apart from said storage means in said first and second game machines, and
said game progress means of said second game machine acquires the state and history of the suspended game stored in said storage means via said communication means when said reading means of said second game machine read the code information on a respective one of said recording mediums associated with the suspended game, and restarts the suspended game in said second game machine using the acquired state and history of the suspended game.

Preferably, the game machine further comprises verifying means for verifying the code information read by said reading means.

Preferably, the recording mediums are magnetic cards.

In order to ease understanding of the invention, the reference numerals of the attached drawings are given here with them being put in parentheses, but the present invention is not limited to the forms in the drawings.
FIG. 1 is a perspective view showing an outline of a game system according to an embodiment of the present invention which is applied to a medal game machine.
FIG. 2 is a control block diagram showing a main control portion of a game machine of the present invention.
FIG. 3 is a control block diagram showing a station control portion of the game system of the present invention.
FIG. 4(a) is a diagram showing a data structure of player's data; and FIG. 4(b) is a diagram showing a data structure of magnetic card information.
FIG. 5 is a flowchart showing a cycle control process.
FIG. 6 is a flowchart showing a process in a station control device after a magnetic card is inserted.
FIG. 7 is a flowchart showing a raising process.
FIG. 8 is a diagram showing a player's horse selection screen.
FIG. 9 is a diagram showing a stable selection screen.
FIG. 10 is a diagram showing a horses' name selection screen.
FIG. 11 is a diagram showing a race selection screen.
FIG. 12 is a diagram showing a leading jockey selection screen.
FIG. 13 is a diagram showing a training process screen.
FIG. 14 is a diagram showing a data display screen.
FIG. 15 is a diagram showing a cycle of a game progress.
FIG. 16 is a flowchart showing a collating process.
FIG. 17 is a flowchart showing a data updating process.
FIG. 18 is a diagram showing a bet screen.

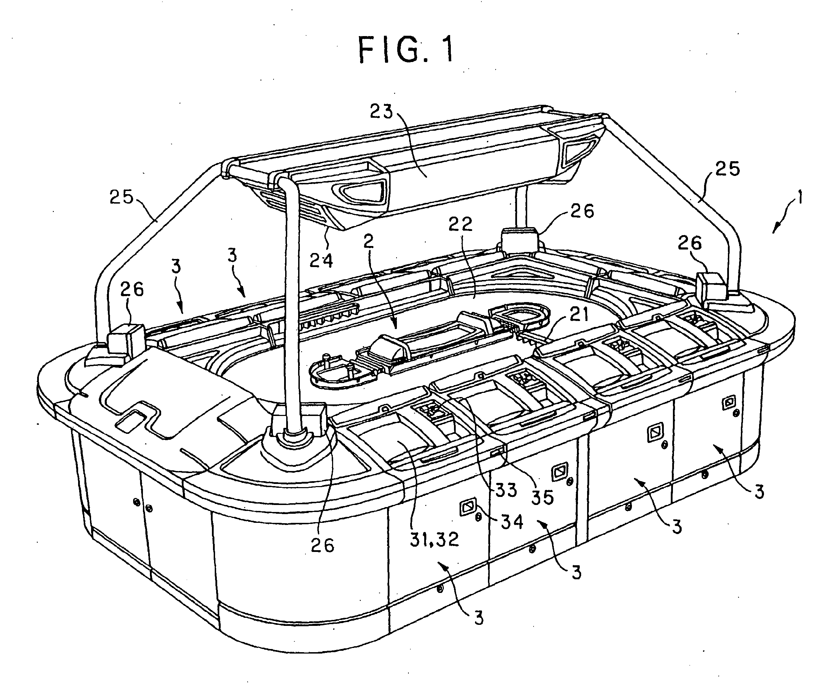

There will be described below a game system according to one embodiment of the present invention with reference to FIGS. 1 through 18.

FIG. 1 is a perspective view showing an outline of a game system according to the present embodiment. In the present embodiment, the game system of the present invention is applied to a so-called medal game machine which is installed in a game center (arcade) or the like.

As shown in FIG. 1, a game machine 1 has a field 2 which is provided to the center portion, and a plurality of stations 3 which are provided so as to surround the field 2.

The field 2 is provided with a racetrack 22 having a race gate 21, and models of horses (not shown) are made to run in the racetrack 22 so that races proceed like a real horse racing. A plurality of speaker systems 26 for outputting a sound and the like of a running commentary on a race are provided on the circumference of the field 2.

Each of the stations 3 is provided with a display 31 for displaying a game screen according to the game progress, and a touch panel 32 which is superposed on the display surface of the display 31. When a player touches a predetermined position of the game screen displayed on the display 31 according to commands of the game screen, the position is detected by the touch panel 32 and an operated content of the player is recognized in the game machine 1. Moreover, each of the stations 3 is provided with a medal insertion portion 33 through which a medal as a recreation value is inserted by the player, a medal pay opening 34 from which medals are paid to the player, and a magnetic card insertion opening 35 through which a magnetic card is inserted.

As shown in FIG. 1, a display portion 23 for displaying a name of a game and the like, and an illuminating device 24 which illuminates the field 2 are supported above the field 2 by supporting bars 25.

Next, there will be described below a summary of contents of a game using the game machine 1. In the game machine 1, races whose names are the same as those of JRA (Japan Racing Association) are successively held according to predetermined cycles. About sixty races for one year are prepared, and for each of the races, betting time, namely, time for purchasing a betting ticket, time for executing a race using the models of horses, and time for displaying race results are secured. Time for executing the races changes according to distances and the like of the respective races. The races for one year cycle once for about two hours, and when the races for one year are completed, races for the next year are started successively.

The player expects orders of arrival for each race, and can purchase betting tickets freely. The player can purchase betting tickets by betting medals, and when the purchased betting tickets coincide with the race results, a number of medals which are in accordance with a number of bet medals and odds are paid to the player. Here, the purchase of betting tickets means that the player bets medals on an expected order of arrival.

In addition, the player can participate in a game as a horse owner. Namely, the player can select a desirable horse from prepared race horses, and can purchase this horse with a predetermined number of medals. Moreover, the player can select a stable of the purchased horse of his/her own will. The name of the purchased horse is created by combining a name selected from names previously stored in the game machine main body and a name inputted by the player (for example, player's name). The player trains the purchased horse and raises the horse. Moreover, the player can nominate the raised horse for a desired race, and can select a jockey at the time of the nomination.

In order to ensure the continuity of the game play in the case where the player participates in the game as the horse owner, a magnetic card for storing an ID code of the player and the like is used in the game machine 1. Results of the past games of the player are stored as player's data in the game machine 1, and the ID code and the like of the magnetic card is collated with the ID code included in the stored player's data so that necessary player's data are read so as to be used for the game. For this reason, the player carries the magnetic card so as to enjoy the rest of a game at any time.

In such a manner, in the game machine 1, the races according to the schedule of the actual races in Japan proceed continuously, and the player can purchase betting tickets for desirable races as a spectator, and can purchase and raise a race horse as a horse owner and participate in the races.

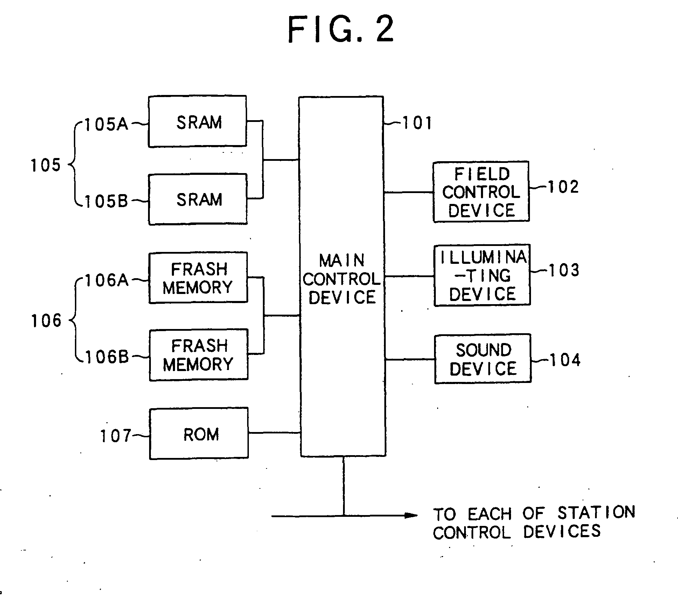

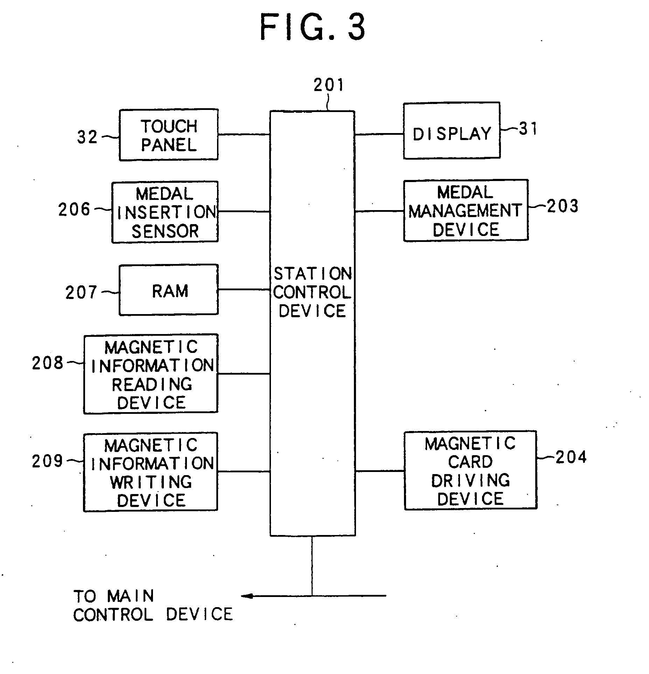

FIG. 2 is a control block diagram showing a main control portion for controlling the operation of the game machine 1 synthetically, and FIG. 3 is a control block diagram showing a station control portion provided to each of the stations 3.

As shown in FIG. 2, the main control portion which is arranged on a side of the field 2 has a main control device 101, a field control portion 102 for controlling running of the models of horses in the field 2, an illuminating device 103 for illuminating the field 2, a sound device 104 for generating sounds for reproducing an atmosphere of the racetrack, an SRAM 105 and a flash memory 106 for storing player's data, and a ROM 107 in which programs necessary for the games and various data bases are stored. The sound device 104 has the speaker systems 26 (FIG. 1). The data bases stored in the ROM 107 include 256 types of horses' names selected by the player and their sound data, various data relating to the respective horses, schedule of the races and the like.

As shown in FIG. 2, the main control device 101 is connected with the field control portion 102, the illuminating device 103, the sound device 104, the SRAM 105, the flash memory 106 and the ROM 107.

The power source of the SRAM 105 is always backed up by battery or the like. Moreover, the two SRAMs 105 and the two flash memories 106 are provided, and the same data are stored in the two SRAMs 105 and flash memories 106. As a result, even when one of the data are destroyed, the data are not lost.

As shown in FIG. 2, the SRAM 105 and the flash memory 106 have two units 105A and 105B and units 106A and 106B respectively, and when one unit malfunctions or is replaced, the other unit can be used as backup.

As shown in FIG. 3, the station control portion which is provided to each of the stations 3 has a station control device 201, the display 31, a medal managing device 203 for managing payment of medals, a magnetic card driving device 204 for driving a magnetic card inserted into the magnetic card insertion opening 35, the touch panel 32, a medal insertion sensor 206 for detecting a medal inserted via the medal insertion portion 33, a RAM 207 for temporarily storing player's data, a magnetic information reading device 208 for reading magnetic information of the magnetic card inserted into the magnetic card insertion opening, and a magnetic information writing device 209 for writing magnetic card information into the magnetic card.

As shown in FIG. 3, the station control device 201 is connected with the display 31, the medal managing device 203, the magnetic card driving device 204, the touch panel 32, the medal insertion sensor 206, the RAM 207, the magnetic information reading device 208 and the magnetic information writing device 209.

In addition, as shown in FIGS. 2 and 3, the station control device 201 of each of the stations 3 is connected with the main control device 101, and necessary communication can be executed between the station control device 201 and the main control device 101.

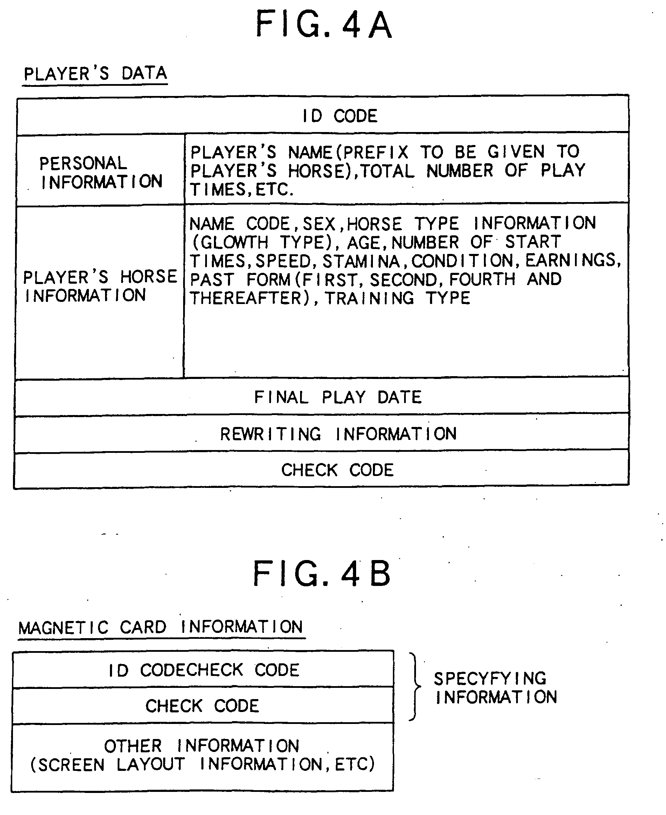

FIG. 4(a) shows a data structure of the player's data which are stored and managed per player. The player's data include information about a state and history of a game. As shown in FIG. 4(a), the player's data are composed of an ID code allocated to each player, personal information about the player, information about a player's horse relating to a player's horse, last play date information for specifying the date on which the player played the game last time, rewriting information for recording updating of the data, and a check code for preventing interpolation of the magnetic cards and the like.

In the present embodiment, the ID code and check code are used as specifying information.

The ID code is a number which is allocated to one player, and it is set so as not to overlap an ID of another player's data.

The personal information is information relating to a player such as a name of the player and a total number of play times. The personal information is used as data for game contents and also as customer managing data. Here, the player's name is used also as a prefix which is given to a name of a player's horse included in the information about the player's horse.

The information about the player's horse is composed of a name code for specifying a name of each horse, sex, horse type information specified as a growth curve, age, a number of entries, speed, stamina, condition, accumulated earnings, forms per past race (for example, first, second or fourth and thereafter), a training type determined according to a selected stable and the like.

The last play date represents a date on which the player played last time using the player's data. More concretely, the last play date represents elapsed days from a certain past day, such as January 1, 1999. The last play date and the player's data are compared so that incompatibleness can be checked. As a result, the data of the last play date can be utilized for preventing indirection.

The personal information and the information about a player's horse and the last play date information are used as a game history for ensuring continuity of a suspended game.

The rewriting information is a numerical value which increases every time the player's data are updated by a training process or the like, mentioned later. In the case where the player's data are updated based on the game play in the station 3, an even number value is stored as the rewriting information. However, in the case where the player's data are updated finally in the main control device 101 due to any reasons such as an accident of the station 3 or the like, this numerical value obtains an odd number until next updating.

The player's data are retained in the SRAM 105 or the flash memory 106. Moreover, when the player plays a game in the station 3, necessary player's data are read into the RAM 207 of the corresponding station 3 so as to be utilized for various processes in the station 3.

The check code is an error detecting code which is created based on the respective data of the ID code, personal information, information about a player's horse, last play date and rewriting information, and it is used for checking existence of interpolation and accident in the magnetic card, and as to whether or not the player's data are transmitted and received properly between the station 3 and the main control device 101.

FIG. 4(b) shows specifying information to be recorded in the magnetic card. The specifying information is used for specifying a player, and as shown in FIG. 4(b), the specifying information is composed of the ID code and check code of the player's data. The other data composing the player's data are not recorded in the magnetic card. As a result, the indirection of interpolation of the magnetic card information can be prevented. As shown in FIG. 4(b), also information which is not used for creating the error detecting cord, such as layout information and the like on the screen which is not related to the game progress, can be recorded in the magnetic card. Description of Operation

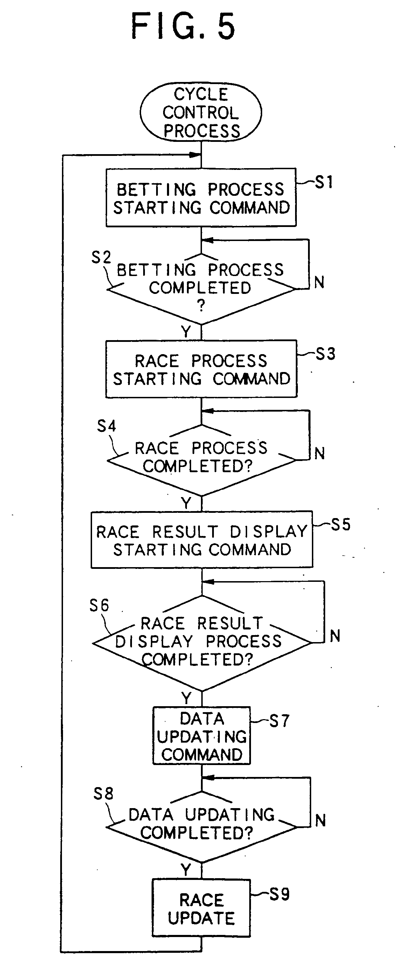

There will be described below a part of the operation of the game machine 1 with reference to FIGS. 5 through 18. Various input operations which are performed by the player according to the display on the display 31 are recognized in the station control device 201 based on a signal outputted from the touch panel 32, but the description of the process for recognizing the input operations will be omitted.

FIG. 5 is a flowchart showing a cycle control process which is carried out in the main control device 101. The cycle control process is carried out in order to carry out the annual races in predetermined order and to direct switching timing of various processes included in the races.

In the cycle control process, the main control device 101 makes control so as to execute (1) a betting process, namely, a process for purchasing betting tickets, (2) a race process for a making horses to enter and executing a race, (3) a race result display process for displaying order of arrival and odds in the race and the like, and (4) a data updating process for transmitting latest player's data from each of the stations 3, and updating the player's data in the SRAM 105.

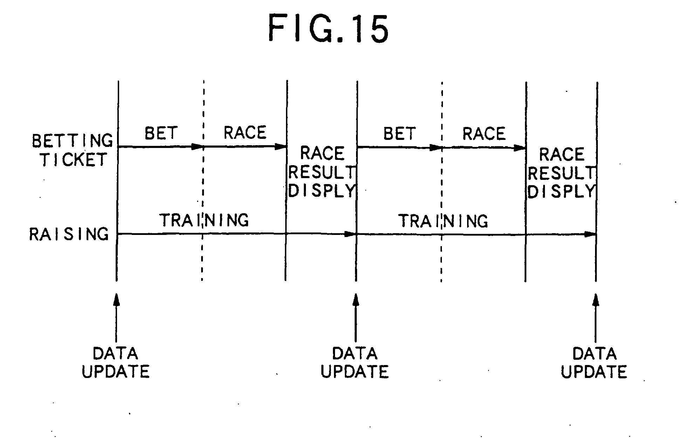

According to the above processes, while the game machine 1 is operated, the annual races held in Japan are executed one by one in predetermined order and with a period of about 2 minutes for 1 cycle. A raising process, mentioned later, is executed with a predetermined period within the above cycle together with the above processes (see FIG. 15). FIG. 15 shows a part of the race cycle which is controlled by the cycle control process.

Next, there will be detailed below the cycle control process. At step S1 in FIG. 5, starting of the betting process is commanded. Upon receiving this command, the betting process is executed in the station control device 201 in each of the stations 3. Next at step S2, the sequence waits until the betting process is completed so as to go to step S3.

At step S3, starting of the race process is commanded. Upon receiving this command, an operation for running models of horses and various processes (not shown) for realizing output of necessary sounds and the like are executed based on the control of the main control device 101. At next step S4, the sequence waits until the race process is completed so as to go to step S5.

At step 5, starting of the race result display process is commanded. Upon receiving this command, a predetermined process (not shown) for displaying order of arrival, odds, allotment and the like on the display 3 is executed in the main control device 101. At next step S6, the sequence waits until the race result display process is completed so as to go to step S7.

At step 7, a data updating command for updating the player's data is transmitted, and the sequence waits until the data updating process is completed at step S8 so as to go to step S9. At step S9, the race is updated to a next race and the sequence returns to step S1. At step S8, when a data updating completion flag which is set by the data updating process is ON, a judgment is made that the data updating process is completed, and the data updating completion flag is turned OFF at step S9. The data updating process will be described later.

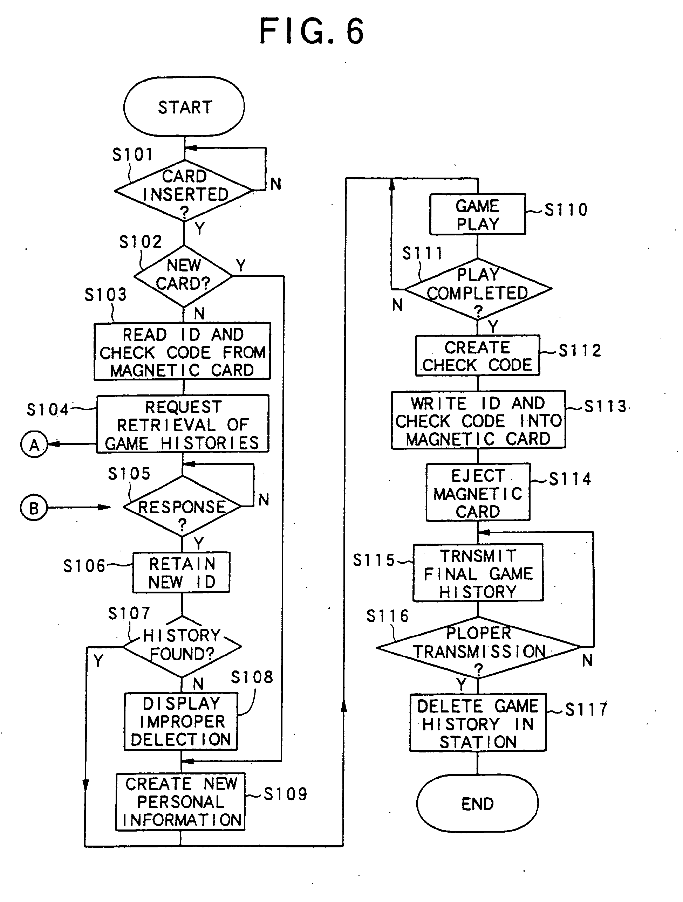

Next, there will be described below a process of the station control device 201 in the case where a magnetic card is inserted into the magnetic card insertion opening 35 of the station 3 with reference to FIG. 6.

At step S101 in FIG. 6, the sequence waits until the magnetic card is inserted into the card insertion opening 35 so as to go to step S102, and a judgment is made as to whether or not the inserted magnetic card is a new card. When the judgment is made NO, the sequence jumps to step S109. When the judgment is made as YES, the magnetic card driving device 204 and the magnetic information reading device 208 are controlled , at step S103 so that the ID code and check code of the magnetic card are read.

At next step S104, the ID code and check code of the inserted magnetic card are transmitted to the main control device 101, and the main control device 101 is requested to retrieve the player's data whose ID code is identical to the ID code of the magnetic card (FIG. 6 "A"). Upon receiving this request, the main control device 101 retrieves the ID code, but this process will be mentioned later.

At next step S105, the sequence waits for response from the main control device 101 and goes to step S106 so that a new ID code transmitted from the main control device 101 is retained in the RAM 207. The response from the main control device 101 and the like (FIG. 6 "B") will be mentioned later.

At next step S107, when as a result of the retrieval in the main control device 101, the judgment is made that the player's data whose ID matches the ID of the magnetic card exist, the sequence jumps to step S110. When the judgment is made that the player's data whose ID does not match with the ID of the magnetic card do not exist, at step S108 the states that the contents of the magnetic card are improper or the past information is deleted due to the expiration are displayed on the display 31, for example, so that these states are posted to the player. At next step S109, new personal information is prepared and the sequence goes to step S110.

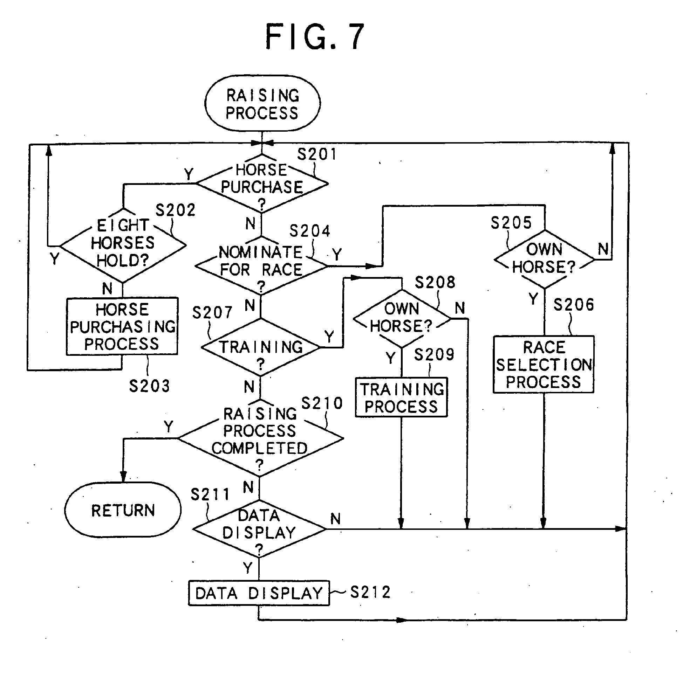

At step S110, process necessary for the game play by the player is executed. The raising process (FIG. 7), mentioned later, is included in the process. The process at step S110 is continued until a judgment is made that the play is completed at step S111.

When the judgment is made that the play is completed at step S111, a check code is created based on the latest player's data, and the new (current) ID code and check code are written into the magnetic card (step S113), and the magnetic card is ejected (step s114).

At step S115 a state and history (player's data) of the final game stored in the RAM 207 are transmitted to the main control device 101, and when proper transmission is checked (step S116), the player's data in the RAM 207 are deleted at step S117 and the process in FIG. 6 is completed. The state and history (player's data) of the game transmitted at step S115 are stored in the SRAM 105 and are retained therein until the player plays a game next time.

There will be described below the raising process at step S200 with reference to FIGS. 7 through 15. FIG. 7 is a flowchart showing the raising process (step S200) which is executed in the station control device 201.

At step S201 in FIG. 7, a judgment is made as to whether or not an operation for selecting purchase of a horse is performed by the player, and the judgment is made as YES, the sequence goes to step S202. At step S202 a judgment is made as to whether or not the player have already owned eight horses referring to the player's data stored in the RAM 207, and when the judgment is made as YES, the sequence returns to step S201, and when the judgment is made as NO, the sequence goes to step S203. In the case where the player have already owned eight horses, the player cannot purchase more horses.

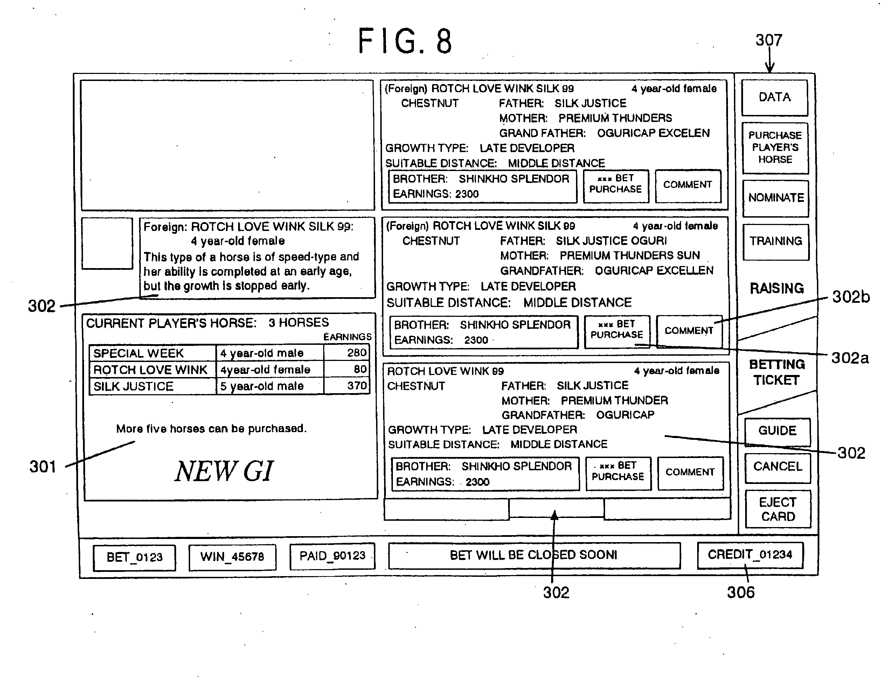

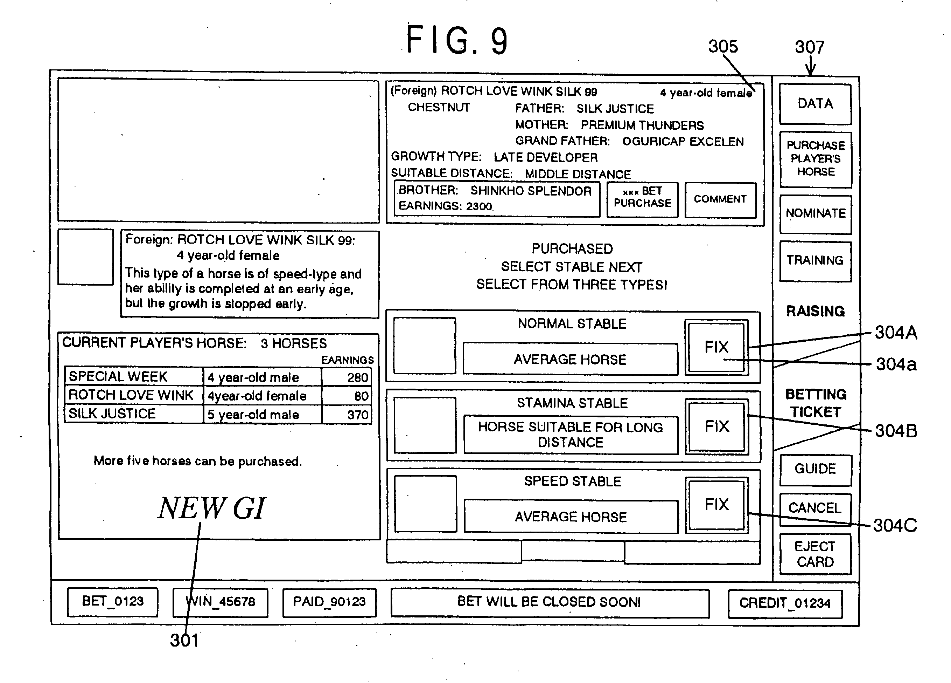

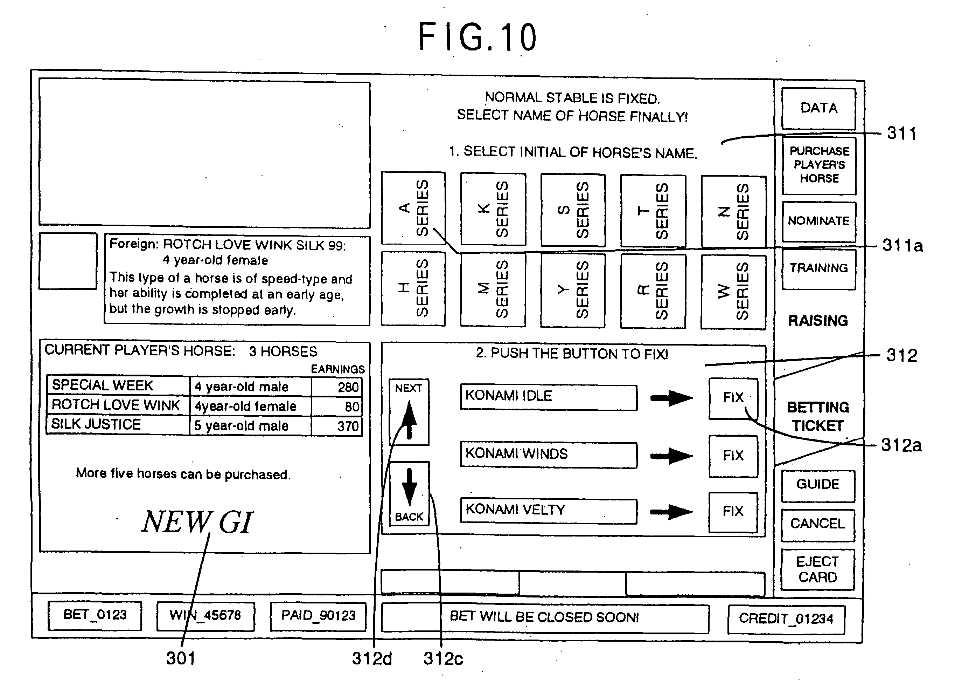

There will be described below the process at step S203 with reference to FIGS. 8 through 10. FIG. 8 is a diagram showing a player's horse selection screen, FIG. 9 is a diagram showing a stable selection screen, and FIG. 10 is a diagram showing a horse name selection screen.

At step S203 a process that the player purchases horses is executed. In this process, the player's horse selecting screen shown in FIG. 8 is displayed on the display 31 with reference to the player's data in the RAM 207.

The horses which have already been owned by the player are displayed on a left area 301 of the player's horse selection screen (three horses are displayed in FIG. 8). Information about the three horses which are candidates to be purchased is displayed on a right area 302. Moreover, a bet button 302a which shows a bet number necessary for purchasing the respective horses is displayed in an area 302 which is allocated to the respective horses as candidates. A comment on one of the horses displayed as candidates is displayed in an area 303 provided above the area 301. This comment is displayed in such a manner that a comment button 302b for the corresponding horse is operated by the player.

In FIG. 8, the three horses are displayed in the area 302, but a number of horses may be set to a larger value, or candidates to be displayed are replaced successively at predetermined timing or an operation by the player so that a selectable number of horses can be increased.

When the player operates the purchase button 302a, a horse corresponding to the purchase button 302a is selected and purchased as a player's horse. A number of bets (a number of medals) paid by the player at the time of the purchase of a horse is set to a value according to the ability of the horse, and in the case of a strong horse, a number of bets becomes larger.

As shown in the area 302, a growth type, a suitable distance and the like such as precocity and late developer are set for the respective horses, and the player can select the raising method which is suitable for a character of the horse, or can select a race for which the horse is nominated. As shown in the process at step S202, the player cannot own nine and more horses.

The horses displayed on the area 302 can be changed for each of the stations 3, and the horses to be displayed may be changed according to current credit. For example, in the station 3 where the credit is low, horses whose purchase prices are low may be mostly displayed, and in the station 3 where the credit is high, horses whose purchase prices are high may be mostly displayed. Moreover, only horses which can be purchased by current credit may be displayed on the area 302 of the respective stations 3. In such a manner, when the display of horses is changed according to credit, a number of horses to be displayed is decreased so that the display on the screen can be simple. Moreover, since only horses which can be substantially purchased by the player are displayed, the operation by the player becomes simple. A number of current credits is displayed on an area 306 at the lower-right corder of the player's horse selection screen.

The purchase of the player's horses is stored by updating the player's data in the RAM 207.

As shown in FIG. 8, during the game, an area 307 is obtained on a right end portion of the screen so that game modes in the station 3 (betting ticket purchase mode, horse raising mode) can be changed. When the player operates the buttons on the area 307, a mode is changed into the mode corresponding to the operated button, and a predetermined game screen corresponding to the mode is displayed on the display 31. The data display mode, horse purchase mode, nominating mode and training mode which compose the raising mode are changed by operating the buttons on the area 307.

After the purchase of the horses, a stable selection screen shown in FIG. 9 is displayed on the display 31 with reference to the player's data in the RAM 207. A right side of the stable selection screen is provided with areas 304A, 304B and 304C for selecting three types of stables: normal stable; stamina stable and speed stable. Fix buttons 304a are provided respectively in the areas allocated respectively to the stables, and when the player operates the fix button 304a, the stable corresponding to the fix button 304a is selected.

Information about a horse purchased this time is displayed on an area 305 provided on a upper right side of the stable selection screen, and the player can select a stable while referring to that information.

As shown in the areas 304A through 304C, when the stamina stable is selected, the horse is raised as long distance type, when the speed stable is selected, the horse is raised as short distance type, and when the normal stable is selected, the horse is raised as average type which does not lean towards the long distance type or short distance type.

The selected stable is stored by rewriting the player's data in the RAM 207.

After the selection of the stable, the horse name selection screen shown in FIG. 10 is displayed on the display 31 with reference to the player's data in the RAM 207. As a horse name to be used for the player's horse, one horse name is selected from prepared 256 types of horse names. A right side of the horse name selection screen is provided with an area 311 for retrieving a horse name using initials. Moreover, an area 312 on which three horse names according to the initials selected by a button 311a is provided below the area 311. As shown in FIG. 10, a name that prefix "Konami" is added to a horse name "idle" is displayed on the area 312. The prefix is nothing but the name of the player included in the personal information (see FIG. 4(a)). When buttons 312c and 312d provided on the area 312 are operated, horse names arranged in the order of the Japanese syllabary can be changed successively. When the player operates the fix button 312a provided on the area 312, the horse name displayed on the left side of the button 312a is selected as a formal name of the horse purchased this time.

The horse name included in the names of player's horses is outputted as a sound via the sound device 104 at the time of live call when the horse is nominated for the race so that presence of the race is improved. In such a manner, the name of the player's horse is created by combining the horse name which is selected from prepared 256 types of horse names and the prefix, and the horse name is outputted as a sound so that a special horse name which does not overlap another player's horse names can be secured and the horse name can be outputted as natural sound at the time of live call.

The name of the player's horse is stored as the player's data in the RAM 207.

After the above process is completed, the sequence returns from step S203 to step S201 (FIG. 7).

Meanwhile, when the judgment at step S201 is made as NO, the sequence goes to step S204 so that a judgment is made as to whether or not the player selects nomination for the race. When the judgment is made as YES, the sequence goes to step S205 so that a judgment is made as to whether or not the player owns a player's horse. When the judgment is made as YES, the sequence goes to step S206, and when the judgment is made as NO, the sequence returns to step S201.

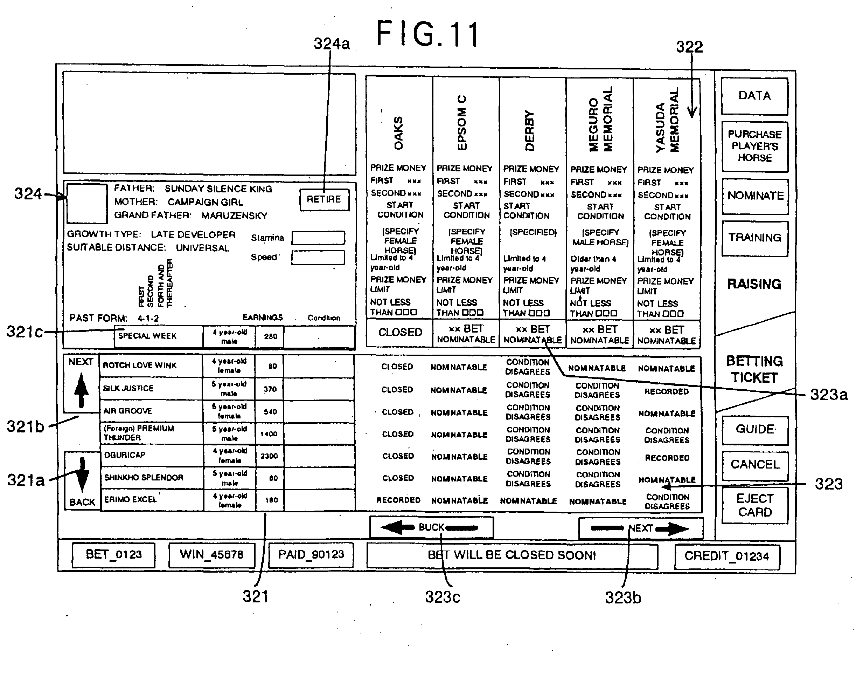

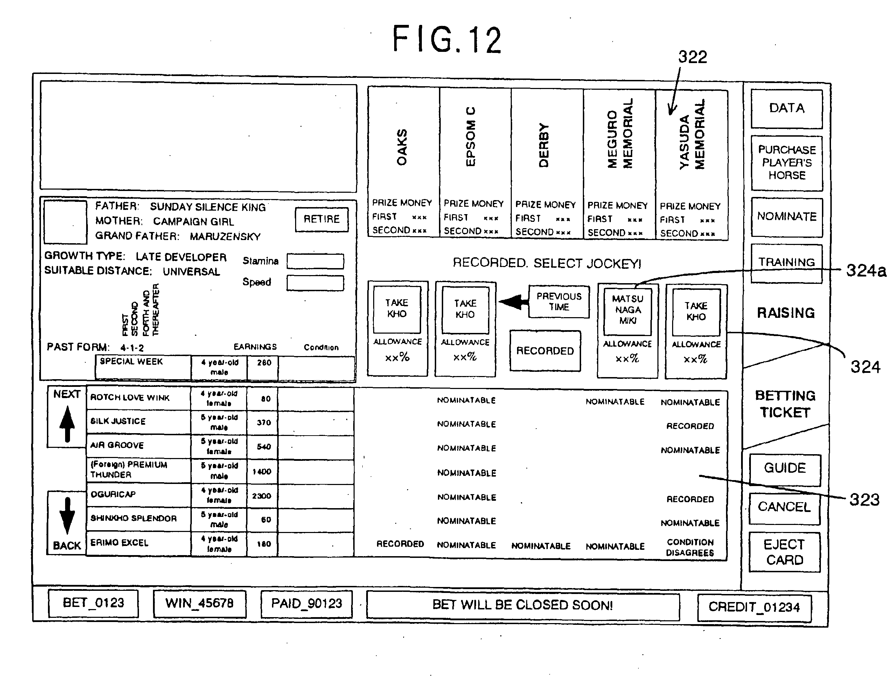

There will be described below the process at step S206 in FIG. 7 with reference to FIGS. 11 and 12. FIG. 11 is a diagram showing the race selection screen, and FIG. 12 is a diagram showing the jockey selection screen.

At step S206 a process for selecting a race for which the horse is nominated is executed. In this process, at first the race selection screen shown in FIG. 11 is displayed on the display 31 with reference to the player's data in the RAM 207. A left side of the race selection screen is provided with an area 321 where a list of the player's horses is displayed, and when the player operates buttons 321a and 321b of the area 321, the horse names can be scrolled up and down. The horse selected currently is displayed on an area 321c at the topmost part.

A right side of the race selection screen is provided with an area 322 where race names are displayed, and an area 323 where each of nominatable horses in each displayed on the area 322 is displayed. As shown in FIG. 11, prize money and start condition in the case where a horse come in first or second in each race are displayed together with the race names on the area 322. Four types of words: "Recorded" which represents that the nomination of corresponding horse has been already recorded; "Nominatable" which represents the corresponding horse is nominatable; "Condition disagrees" which represents that the corresponding horse disagrees with the start condition; and "Closed" which represents that the nomination recording is closed are displayed on the area 323. As a result, the player can recognize as to whether or not the horses are nominatable.

As for the horse displayed on the area 321c, namely, the selected horse, the above four types of words as well as buttons 323a where a number of bets to be paid by the player are displayed as the nomination recording condition in the races for which the horse is nominatable are provided. When the player operates the button 323a, the nomination of the selected horse is recorded for the race corresponding to the operated button 323a. For example in FIG. 11, when the player operates the button 323a corresponding to "Derby", the horse displayed on the area 321c is recorded as a horse to be nominated for "Derby". When the buttons 323b and 323c are operated, the race names arranged in the order of fixture can be scrolled in a right-and-left direction.

An upper part of the area 321c is provided with an area 324 where information about the horse selected currently is displayed, and when a retire button 324a on the area 324 is operated, the horse displayed on the area 321c can be retired.

Next, the jockey selection screen shown in FIG. 12 is displayed on the display 31. On this screen, a jockey who rides on the recorded horse is selected. Since the abilities vary from respective jockeys, the percentage of victories in the races changes according to the selected jockeys. Moreover, since mount tactics vary from the respective jockeys, it is necessary to judge congeniality between the jockeys and running type of the nominated horses. For this reason, skill which is equivalent to that of the actual horse racing is required, and reality of the games can be improved.

Salary of the jockeys according to their ability or the like, namely, jockey's share in the case where the horse nominated for the race acquires prize money is set. For example, in the case of a front-rank jockey, the percentage of victories is high, namely, the jockey's share is 60 % and player's share is 40 %. In the case of a third-rate jockey, the percentage of victories is low, namely, the player's share is 100 %. In this case, as for the race where prize money is two-hundred medals, for example, when a first-rate jockey on the horse wins the race, the player can acquire eighty medals, and when a third-rate jockey on the horse wins the race, the player can acquire two-hundred medals.

Therefore, the player can select a jockey taking not only odds of the medal game but also odds of the race into consideration. Accordingly, in the present embodiment, diversified ways to enjoy the game can be provided to the player.

As shown in FIG. 12, the percentage of the jockey's share and the mount method (front running, stretch running and the like) as well as the jockey's names are displayed on the area 324, and the player can select a jockey referring to the jockeys' share. When the player operates the buttons 324a arranged on the area 324, the jockey corresponding to the button 324a is set as a jockey who rides on the horse in the race.

The jockey who rides on the horse is stored by rewriting the player's data in the RAM 207.

After the above process is completed, the sequence returns to step S201.

Meanwhile, the judgment at step S204 is made as NO, the sequence goes to step S207 so that a judgment is made as to whether or not the player selects training of the player's horse. When the judgment is made as YES, the sequence goes to step S208. At step S208 a judgment is made as to whether or not the player has already owned horses referring to the player's data in the RAM 207, and when the judgment is made as YES, the sequence goes to the training process at step S209. When the judgment is made as NO, the sequence returns to step S201.

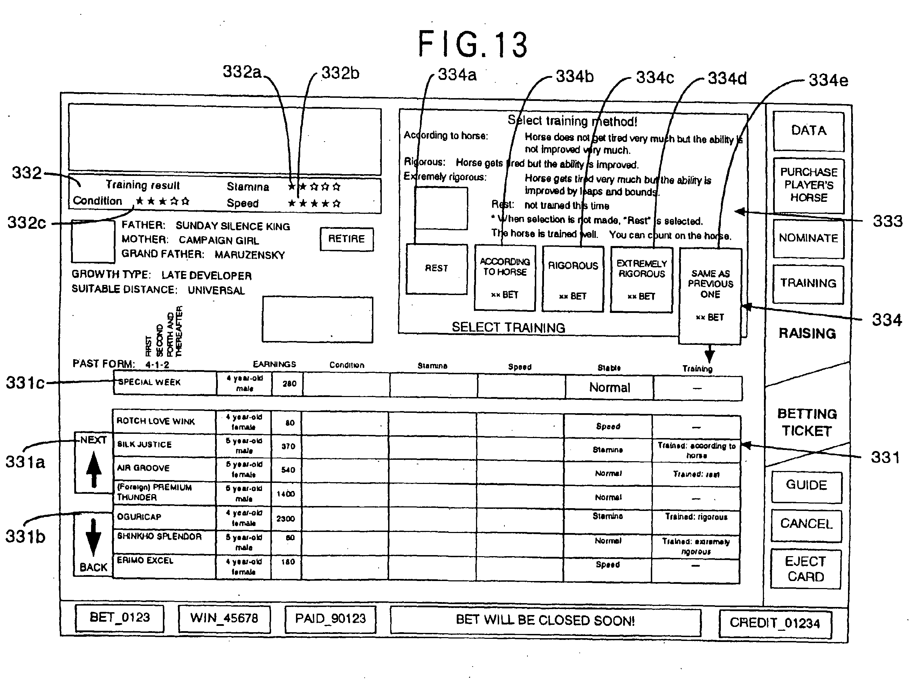

There will be described below the training method at step S209 with reference to FIG. 13.

In the training process, the player bets his/her medals so that the horse is trained, and as a number of bet medals is large, the ability of the horse after the training is improved more. For example, the player can bets one through three medals and the trained result according to the number of medals can be obtained. Since the player bets medals and trains the horse so that the ability of horse is improved and the percentage of victories in the race can be heightened, the player can raise the horse in a form that the medals are saved for the horse.

In such a manner, in the present embodiment, since the horse can be trained, the player can enjoy the reality that the player's horse is raised to be a strong race horse.

The ability of the horse is represented by a plurality of parameters (stamina, speed, condition). In the training process, the player cannot select as to which parameter nor how much a numerical value of the parameter is increased. Moreover, the player cannot select the training menu (contents of the training) either. Which parameter and how much the value of the parameter is increased is determined in the station control device 201 according to the selected stable and the number of bets. As a result, the horse can be trained without requiring a complicated input operation.

As shown in FIG. 13, a table, which shows sex, age, earning, parameter, stable and previous training method of the player's horse, is displayed on an area 331 on a lower side of the training process screen. The display of the table can be scrolled by operating the button 331a and the button 331b. The horse which is currently selected as a horse to be trained is displayed on a topmost part 331c of the area 331. The parameters of this horse are displayed as the trained results also on an area 332 on the upper left side of the training process screen. In the area 332, as the trained results, 332a represents the stamina, 332b represents the speed, and 332c represents the condition, and their grades are known by a number of highlighted starts, and they are added to the ability of the horse.

The upper right side of the training process screen is provided with an area 333 where the description of the training methods is displayed, and an area 334 where buttons for selecting the training methods are arranged. Buttons 334a through 334e which shows the training methods such as "Rest", "According to horses", "Rigorous", "Extremely rigorous" and "Same as the last time" are arranged on the area 334, and the player operates the buttons 334a through 334e so that the training method according to the operated button is selected.

When "Rest" is selected, the horse is not trained this time. When "According to horses" is selected, the horse is trained in such a manner that the horse does not get much tired but the ability is not improved very much. When "Extremely rigorous" is selected, the horse is trained in such a manner that the horse gets tired very much but the ability is improved by leaps and bounds. When "Rigorous" is selected, the horse is trained to a type between the "According to horses" and "Extremely rigorous". Moreover, when "Same as the last time" is selected, the horse is trained in the manner same as the manner used for the horse last time. As a result, the trouble of input operations can be saved.

When the training process is completed, the sequence returns to step S201.

The training process at step S209 is executed only from the starting of the betting process to the starting of the next betting process as shown in FIG. 15. At the time when the next betting process is started, the training process is forcibly ended, and the sequence returns from the step S209 to step S201. Moreover, only one-time training is possible per this period, and the training cannot be repeated two or more times. Therefore, the player's horse cannot be raised rapidly with neglecting the passage of time assumed by the cycle of the races, and reality is given to the raising speed of the horse.

The trained results obtained by the selected training method and this training are stored by rewriting the player's data in the RAM 207.

Meanwhile, when the judgment at step S207 is made as NO, the sequence goes to step S210. At step S210, a judgment is made as to whether or not the completion of the raising process is selected by the player's operation, and when the judgment is made as NO, the sequence goes to step S211.

At step S211, a judgment is made as to whether or not the data display process is selected by the player's operation, and when the judgment is made as YES, the sequence goes to the data display process at step S212. When the judgment is made as NO, the sequence returns to step S201.

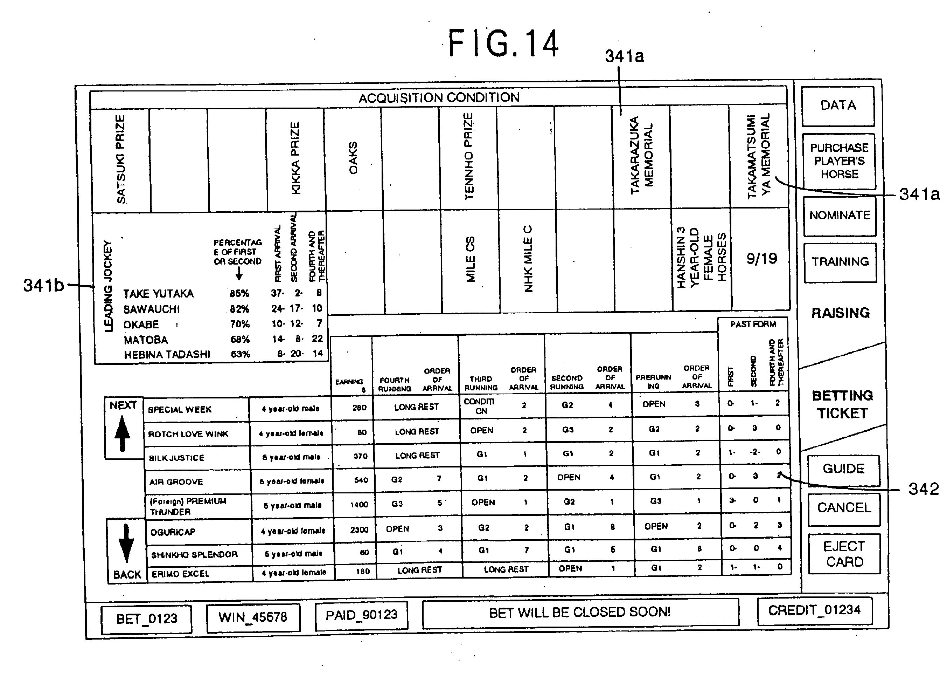

There will be described below the data display process at step S212 with reference to FIG. 14. FIG. 14 shows the data display screen displayed on the display 31 in the data display process. An area 341 provided to the upper side of the data display screen is provided with display 341a of a table of G1 race victory or defeat, and display 341b of results of the leading jockeys. Moreover, an area 342 where a table of results of the horses is displayed is provided to the lower side of the data display screen. As shown in FIG. 14, the horses' names, age, sex, earnings and past form are displayed on the area 342.

When the process at step S212 is completed, the sequence returns to step S201.

Meanwhile, the judgment at step S210 is made as YES, the sequence returns to step S111 (FIG. 6).

The above data display is carried out by referring to the player's data stored in the RAM 207.

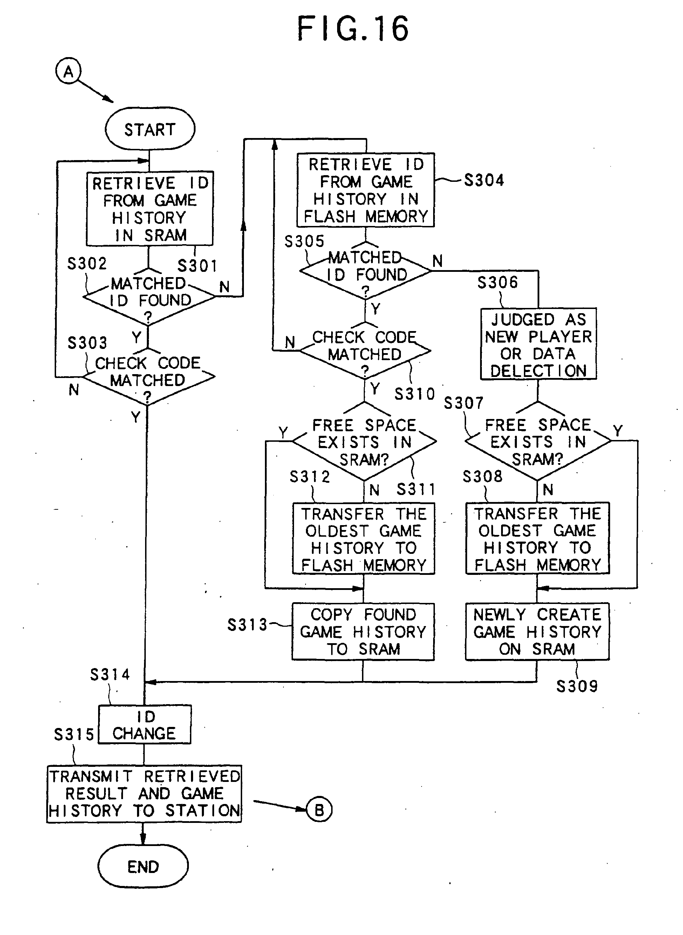

There will be described below a player's data retaining method, the process in FIG. 16 and the data updating process (FIG. 7).

In this game machine 1, as destinations where the player's data (FIG. 4(a)) is retained, two storage devices: the SRAM 105 and the flash memory 106 are prepared. A unit price per capacity of the SRAM 105 is comparatively high, but the access speed is high and a life against rewriting is long. For this reason, in the present embodiment, player's data which might be rewritten frequently are stored in the SRAM 105. On the contrary, player's data where the last play date is comparatively old are retained in the flash memory 106 with large capacity where a unit price per capacity is low.

Since the destinations where the player's data are stored are divided as mentioned above, in the present embodiment, the SRAM 105 takes priority of being used as the destination where the player's data are retained, and when the capacity of the SRAM 105 becomes insufficient, the player's data where last updating date is older are transferred successively to the flash memory 106 so that free space is formed in the storage area of the SRAM 105. Moreover, the player's data retained in the flash memory 106 are deleted manually or deleted automatically after a predetermined period of time passes from the last updated date. As a result, free space is secured in the flash memory 106. It is desirable that the player is warned of the term of a guarantee that the player's data are not deleted and are retained as the term of validity of the game play. Balance of a period up to the deletion and capacities of the SRAM 105 and the flash memory 106 is set in a suitable range so that the player's data can be managed suitably.

When the player comes back to the game machine 1 and the player's data which have been already transferred to the flash memory 106 are reused and updated, as described later in the process in FIG. 16, the player's data are transferred from the flash memory 106 to the SRAM 105. In the case where the player frequently plays games and the updating interval of the player's data is short, during the games, the player's data are still retained in the SRAM 105 without being transferred to the flash memory 106.

There will be described below the collating process with reference to FIG. 16. The collating process is started in response to the request of the station control device 201 at step S104 (FIG. 6), and this process is executed in the main control device 101.

At step S301 in FIG. 16 the player's data retained in the SRAM 105 are retrieved. At next step S302 a judgment is made as to whether or not the player's data, which include the ID code identical to the ID code which was requested to be retrieved at Step S104, are found. When the judgment is made as YES, the sequence goes to step S303 so that a judgment is made as to whether or not the check code transmitted at step S104 matches the check code of the player's data found at the SRAM 105. When the judgment is made as YES, the sequence goes to step S314, and when the judgment is made as NO, the sequence returns to step S301.

When the judgment at step S302 is made as NO, the sequence goes to step S304 so that the player's data retained in the flash memory 106 are retrieved. At next step S305 a judgment is made as to whether or not the player's data, which include the ID code identical to the ID code which was requested to be retrieved at step S104, are found. When the judgment is made as YES, the sequence goes to step S310 so that a judgment is made as to whether or not the check code transmitted at step 104 matches the check code of the player's data found in the flash memory 106. When the judgment is made as YES, the sequence goes to step S311, and when the judgment is made as NO, the sequence returns to step S304. At step S311 a judgment is made as to whether or not a free area exists in the SRAM 105. When the judgment at step S311 is made as NO, the player's data which have not been updated for the longest time in the SRAM 105 are transferred to the flash memory 106 (step S312), and the sequence goes to step S313. When the judgment at step S311 is made as YES, the sequence skips to step S313. At step S313 the state and history of the games (player's data) found in the flash memory 106 are copied to the SRAM 105, and the sequence goes to step S314.

Meanwhile, when the judgment at step S305 is made as NO, at step S306 a judgment is made that the player is a new player or the player's data in the flash memory 106 have been already deleted. At next step S307 a judgment is made as to whether or not a free area exists in the SRAM 105. When the judgment at step S307 is made as NO, the player's data which have not been updated for the longest time in the SRAM 105 are transferred to the flash memory 106 (step S308), and the sequence goes to step S309. When the judgment at step S307 is made as YES, the sequence skips to step S309. At step S309 the state and history of the games (player's data) found in the flash memory 106 are copied to the SRAM 105, and the sequence goes to step S314.

At step S314 a new ID code is created, and at next step S315 the new ID code, the retrieved results, and the found game history or newly created history are transmitted to the station control device 101, and the process in FIG. 16 is ended. The ID code which was transmitted in the process at step S315 is retained at step S106 (FIG. 6). Moreover, the judgment at step S107 and the process at step S108 are carried out based on the transmitted contents at step S315.

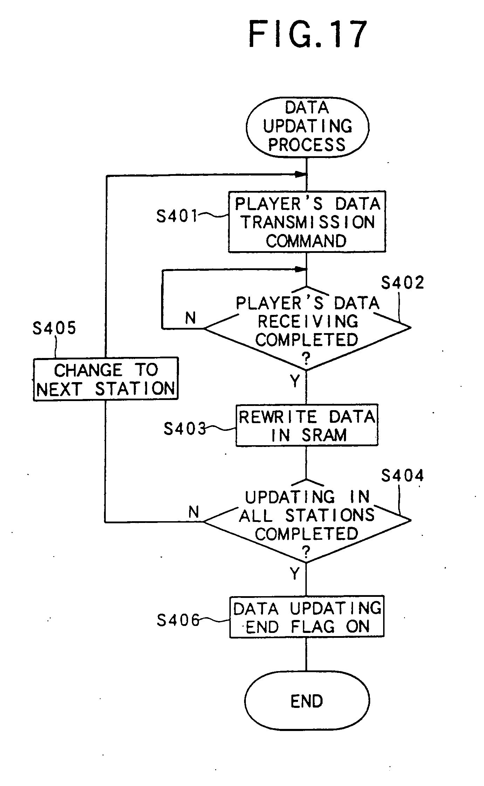

There will be described below the data updating process with reference to FIG. 17. The data updating process is started in response to the data updating command (FIG. 5) at step S7, and it is carried out in the main control device 101.

At step S401 of FIG. 17 a command for requesting the transmission of the player's data, namely, a player's data transmission command is transmitted to the station control device 201 of the respective stations 3. Here, upon receiving the player's data transmission command, the process for transmitting the player's data to the main control device 101 is carried out in the station control devices 201 of the respective stations 3.

At next step S402 the sequence waits for the reception of the player's data from all the stations 3 so as to go to the step S403. At step S403 the player's data retained in the SRAM 105 are rewritten into the player's data transmitted from the station control devices 201 of the stations 3, and the sequence goes to step S404.

At next step S404 a judgment is made as to whether or not the updating of the player's data is completed in all the stations 3 to where the player's data are transmitted to the main control device 101. When this judgment is made as NO, the sequence goes to step S405, and an object of the player's data in the SRAM 105 to be rewritten is changed into next station 3, and the sequence returns to step S401. When this judgment is made as YES, a data updating end flag is turned ON at step S406, and the process is ended. The data updating end flag is, as mentioned above, a flag to be judged at step S8 in the cycle process of FIG. 5, and when the data updating end flag is ON, the sequence goes from step S8 to step S9. Therefore, when the updating of the player's data is completed in all the stations 3, the sequence goes to a next race process.

As mentioned above, in the present embodiment, since the states and histories of the games up to the last time are retained as the player's data, when the player comes back to the game, the rest of the game which was suspended last time can be restarted. However, while the game machine 1 is operated, annual races are held successively in the game machine 1, and one year from a game viewpoint passes within two to three hours. Therefore, for example, in the case where the player ends the play at the race of "Yayoi Prize (March)" and the player comes back a few days after and restarts the play at the time of the "Derby (June)" race, a dozen years on the game has passed. At this time, if it is regarded that the time on the game has passed according to the operating time of the game machine 1 and the play is restarted, the player's horse has not been trained at all for a dozen years and the horse got old. For this reason, the player looses an interest in the games.

For this reason, in the present embodiment, the passage of time on the games is managed independently per player, and in the above case, the play is restarted at the time of the "Yayoi prize" race where the player suspended the play and the "Derby" race in the same year, and it is regarded that the horse has rested for three month on the game. As a result, even when the game is suspended, when the player restarts the play, the player's horse can display the ability sufficiently, and the player can enjoy the schedule of the JRA sufficiently. Since it is not preferable that the passage of time on the game is reversed, for example, in the case where the play is suspended at the "Derby (June)" race and the play is restarted at the "Yayoi (March)" race, it is regarded that the restarted race is the "Yayoi (March)" race in the next year. Namely, the player's horse has rested for nine months.

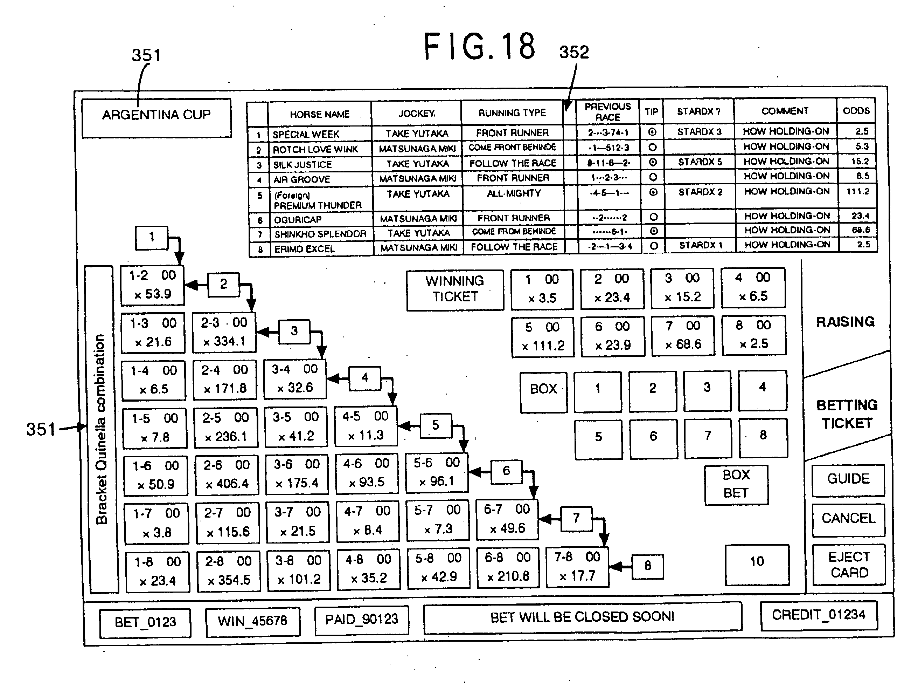

FIG. 18 shows the betting screen displayed on the display 31 in the betting process. As mentioned above, in the betting process, the player can purchase betting tickets of the races (see FIGS. 5 and 15). As shown in FIG. 18, the upper left side of the betting screen is provided with an area 351 where race names are displayed, the upper right side of the betting screen is provided with an area 352 where information about the horses nominated for the race is displayed, and the lower side of the betting screen is provided with an area 353 where odds of the race are displayed. In the betting process, the player operates a predetermined place of the area 252 so as to be capable of purchasing betting tickets.

Here, the betting screen display method may be changed according to the results of the player's horses. For example, in the case where the player's horse wins the G1 race, the display image of the horse displayed on the area 352 can be different from those of the other horses, or the display layout of the horse can be different from those of the other horses.

In the present embodiment, since the states and histories of the play are not stored in the magnetic card but in the game machine 1, in the case where the respective game machines 1 are installed independently, the player cannot play the rest of the game unless the player uses the same game machine 1. Therefore, a plurality of game machines are connected via some communication means so that the player's data can be transmitted. When the player's data are transmitted, the player can play the rest of the game using another game machine.

In addition, the states and histories of the games may be stored in a portable recording medium such as a magnetic card or an IC built-in card. In this case, since the game can be continued by using the information stored in the portable recording medium, a game machine which is used for continuing the rest of the game is not limited. Therefore, the player can enjoy the rest of the games in another place where the game machine is installed.

In the present embodiment, every time the game is suspended, the ID code is changed (step S314), but it is not always necessary to change the ID code every time. Moreover, since improper use of the magnetic card can be prevented by the process for changing the check code, the ID code is not changed and a constant ID code may be set in one magnetic card. Moreover, only ID code may be used as the specifying information.

The present embodiment referred to the race horse raising game as an example of the raising, but for example, the present invention can be applied also to games where player can enjoy a process for tuning up a car in an auto race or a process for improving the ability of a cycle racer. In the specification, "Raising" includes a general idea that the ability of all objects in games is improved and the ability is controlled.

According to a first aspect of the invention, since the states and histories of the game stored in storage means are used, the continuity of the game can be secured. Moreover, since the states and histories of the game are stored in the storage means, it is not necessary to record the states and history of the game in a recording medium. For this reason, improper use of the recording medium can be prevented efficiently.

According to a fourteenth aspect of the invention, since the states and histories of the game stored in a recording medium are used, the continuity of the game can be secured.

According to a fifteenth aspect of the invention, since the states and histories of the game stored in the storage means are used, the continuity of the game can be secured. Moreover, since the states and histories of the game stored in the storage means are obtained via communication means, the rest of the game played in a first game machine can be played in a second game machine.

According to a sixteenth aspect of the invention, since a judgment is made by right/wrong judging means as to right or wring of specifying information in the recording medium, improper use of the recording medium can be prevented efficiently.

## Claims

1. A game system for paying for recreating value according to progress of a game, comprising:
a plurality of recording mediums, each of said recording mediums containing unique code information; and
a game machine (1), said recording mediums being detachably connectable to said game machine, said game machine having reading means (208) for reading the code information in each of said recording mediums when said recording mediums are coupled to said game machine, the game machine comprising;
storage means (207) for storing a state and a history of a game at the time of suspension of the game, each state and history of a suspended game is in association with the code information in respective one of said recording mediums;
stations (3) for accepting input operations by players;
game progress means for progressing a game in accordance with the input operations accepted by said stations; and
paying means for paying for recreation value according to the progress of the game in said game progress means,
the game system being **characterised in that**:
said recording mediums are separate and apart from said storage means, and
said game progress means restarts a suspended game using the state and history of the suspended game stored in said storage means when said reading means read the code information on a respective one of said recording mediums associated with the suspended game.

2. A game system according to claim 1, wherein said game machine (1) further comprises writing means (209) for writing information into said recording mediums,
wherein said writing means writes the code specifying information into each of said recording mediums at the time of suspension of the game.

3. A game system according to claim 2, wherein said writing means rewrites the code information in the recording mediums at the time of suspension of the game.

4. A game system according to claims 2 or 3, wherein said game machine (1) further comprises:
collating means for collating the code information stored in said recording mediums and in said storage means; and
code information creating means for creating the code information based on the internal information in said game system,
wherein said writing means (209) writes the code information created by said code information creating means into said recording mediums; and
the code information created by said code information creating means is stored in said storage means.

5. A game system according to any one of claims 1 through 4, wherein said game machine (1) further comprises:
a common field for progressing the game;
said stations (3) being arranged to accept input operations by a player relating to the game progressed in said common field.

6. A game system according to claim 5, wherein said reading means (208) is provided to each of said stations.

7. A game system according to claim 6, wherein said storage means (207) includes:
a first storage device provided to each of said stations, for temporarily storing the state and history of the game generated according to the input operations; and
a second storage device for updating the old state and history of the game by means of the state and history of the game stored in said first storage device.

8. A game system according to claim 7, wherein said game progress means reads the corresponding state and history of the game from said second storage device into said first storage device based on the code information read by said reading means (208), and continuously progress the game using the state and history of the game read into said first storage device.

9. A game system according to any one of claims 1 through 8, wherein the state and history of the game include final play information regarding the last time the game was played; and
wherein the older states and histories of games stored in said storage means (207) take priority in a deletion process based on the final play information.

10. A game system according to any one of claims 1 through 9, wherein the state and history of the game include raising results of an object to be raised by the player on the game.

11. A game system according to claim 10, wherein:
the state and history of the game include the raising results of an object to be raised by the player on the game; and
the object to be raised participates in a race on the game, and the object displays its ability in the race according to the raised results.

12. A game system according to any one of claims 5 through 8, wherein:
the state and history of the game include raised results of an object to be raised by the player in the station; and
the object to be raised participates in a race on the game in the common field, and the object displays its ability in the race according to the raised results.

13. A game system according to claim 12, wherein the object to be raised is a race horse on the game, and the object is nominated for the race in the common field.

14. The game system according to claim 1 comprising;
a first game machine (1) as the game machine;
a second game machine as another game machine;
each of said recording mediums being detachably connectable to said first and second game machines;
communication means for connecting said second game machine and storage means arranged in said first game machine,
wherein said first and second game machines are each provided with:
the reading means (208); the stations (3); the game progress means; and the pay means;
wherein
said recording medium are separate and apart from said storage means in said first and second arcade game machines, and
said game progress means of said second game machine acquires the state and history of the suspended game stored in said storage means via said communication means when said reading means of said second game machine read the code information on a respective one of said recording mediums associated with the suspended game, and restarts the suspended game in said second game machine using the acquired state and history of the suspended game.

15. A game machine according to any one of claims 1 through 14, said game machine (1) further comprises verifying means for verifying the code information read by said reading means.

16. A game system according to any one of claims 1 through 15 wherein the recording mediums are magnetic cards.

## Patentansprüche

1. Spielsystem zum Bezahlen des wieder erzeugten Betrages entsprechend dem Ablauf eines Spiels, umfassend:
eine Vielzahl von Aufzeichnungsmedien, wobei jedes der Aufzeichnungsmedien eindeutige Codeinformation enthält, und
eine Spielmaschine (1), an die die Aufzeichnungsmedien lösbar angeschlossen werden können, die eine Leseeinrichtung (208) zum Lesen der Codeinformation in jedem der Aufzeichnungsmedien hat, wenn die Aufzeichnungsmedien mit der Spielmaschine gekoppelt sind, die Spielmaschine umfasst:
eine Speichereinrichtung (207) zum Speichem eines Zustands und eines Verlaufs eines Spiels zum Zeitpunkt der Unterbrechung des Spiels, wobei jeder Zustand und jeder Verlauf eines unterbrochenen Spiels mit der Codeinformation in dem entsprechenden der Aufzeichnungsmedien verknüpft wird,
Datenstationen (3) zum Empfangen von Dateneingaben durch Spieler,
eine Spielfortsetzungseinrichtung zum Fortsetzen eines Spiels entsprechend den durch die Datenstationen empfangenen Dateneingaben und
eine Bezahleinrichtung zum Bezahlen des wieder erzeugten Betrages entsprechend dem Ablauf des Spiels in der Spielfortsetzungseinrichtung,
das Spielsystem ist **dadurch gekennzeichnet, dass**
die Aufzeichnungsmedien von der Speichereinrichtung getrennt und abgesondert sind und die Spielfortsetzungseinrichtung ein unterbrochenes Spiel unter Verwendung des Zustands und des Verlaufs des unterbrochenen Spiels, die in der Speichereinrichtung gespeichert sind, emeut beginnt, wenn die Leseeinrichtung die Codeinformation auf einem entsprechenden der Aufzeichnungsmedien, die mit dem unterbrochenen Spiel verknüpft sind, liest.

2. Spielsystem nach Anspruch 1, wobei die Spielmaschine (1) des Weiteren eine Schreibeinrichtung (209) zum Schreiben von Informationen in die Aufzeichnungsmedien umfasst und
wobei die Schreibeinrichtung zum Zeitpunkt der Unterbrechung des Spiels in jedes der Aufzeichnungsmedien die den Code spezifizierende Information schreibt.

3. Spielsystem nach Anspruch 2, wobei die Schreibeinrichtung die Codeinformation zum Zeitpunkt der Unterbrechung des Spiels emeut in die Aufzeichnungsmedien schreibt.

4. Spielsystem nach Anspruch 2 oder 3, wobei die Spielmaschine (1) des Weiteren umfasst:
eine Reihungseinrichtung zur Reihung der in den Aufzeichnungsmedien und in der Speichereinrichtung gespeicherten Codeinformationen und
eine Codeinformations-Erzeugungseinrichtung zum Erzeugen der Codeinformation auf Basis der internen Information in dem Spielsystem,
wobei die Schreibeinrichtung (209) die durch die Codeinformations-Erzeugungseinrichtung erzeugte Codeinformation in die Aufzeichnungsmedien schreibt und
die durch die Codeinformations-Erzeugungseinrichtung erzeugte Codeinformation in der Speichereinrichtung gespeichert wird.

5. Spielsystem nach einem der Ansprüche 1 bis 4, wobei die Spielmaschine (1) des Weiteren umfasst:
ein gemeinsames Feld zum Fortsetzen des Spiels,
wobei die Datenstationen (3) eingerichtet sind, um die Dateneingaben durch einen Spieler, die sich auf das in dem gemeinsamen Feld fortgesetzte Spiel beziehen, zu empfangen.

6. Spielsystem nach Anspruch 5, wobei die Leseeinrichtungen (208) für jede der Datenstationen bereitgestellt sind.

7. Spielsystem nach Anspruch 6, wobei die Speichereinrichtung (207) umfasst:
eine erste Speichervorrichtung, für jede der Datenstationen bereitgestellt, zum vorübergehenden Speichem des Zustands und des Verlaufs des Spiels, die entsprechend den Eingabedaten erzeugt wurden, und
eine zweite Speichervorrichtung zum Aktualisieren des alten Zustands und des alten Verlaufs des Spiels mittels des Zustands und des Verlaufs des Spiels, die in der ersten Speichervorrichtung gespeichert sind.

8. Spielsystem nach Anspruch 7, wobei die Spielfortsetzungseinrichtung den entsprechenden Zustand und Verlauf des Spiels aus der zweiten Speichervorrichtung in die erste Speichervorrichtung auf Basis der durch die Leseeinrichtung (208) gelesenen Codeinformation liest und das Spiel unter Verwendung des in die erste Speichervorrichtung gelesenen Zustands und Verlaufs des Spiels kontinuierlich fortsetzt.

9. Spielsystem nach einem der Ansprüche 1 bis 8, wobei der Zustand und der Verlauf des Spiels eine Letztes-Spiel-Information in Bezug auf das letzte Mal, dass das Spiel gespielt wurde, enthalten und
wobei die in der Speichereinrichtung (207) gespeicherten alten Zustände und alten Verläufe der Spiele bei einem Löschvorgang auf Basis der Letztes-Spiel-Information Priorität haben.

10. Spielsystem nach einem der Ansprüche 1 bis 9, wobei der Zustand und der Verlauf des Spiels die Zuchtergebnisse eines Objektes, das durch den Spieler in dem Spiel zu züchten ist, enthalten.

11. Spielsystem nach Anspruch 10, wobei
der Zustand und der Verlauf des Spiels die Zuchtergebnisse eines Objektes, das durch den Spieler in dem Spiel zu züchten ist, enthalten und
das zu züchtende Objekt in einem Rennen in dem Spiel teilnimmt und wobei das Objekt seine Fähigkeit in dem Rennen entsprechend den Zuchtergebnissen zeigt.

12. Spielsystem nach einem der Ansprüche 5 bis 8, wobei
der Zustand und der Verlauf des Spiels die Zuchtergebnisse eines Objektes, das durch den Spieler in der Datenstation zu züchten ist, enthalten und
das zu züchtende Objekt in einem Rennen in dem Spiel in dem gemeinsamen Feld teilnimmt und wobei das Objekt seine Fähigkeiten entsprechend den Zuchtergebnissen zeigt.

13. Spielsystem nach Anspruch 12, wobei das zu züchtende Objekt ein Rennpferd in dem Spiel ist und das Objekt für das Rennen in dem gemeinsamen Feld nominiert ist.

14. Spielsystem nach Anspruch 1, umfassend:
eine erste Spielmaschine (1) als die Spielmaschine,
eine zweite Spielmaschine als eine weitere Spielmaschine,
wobei jedes der Aufzeichnungsmedien lösbar an die erste und an die zweite Spielmaschine angeschlossen werden kann,
Kommunikationseinrichtungen zum Verbinden der zweiten Spielmaschine mit einer in der ersten Spielmaschine angeordneten Speichereinrichtung,
wobei die erste und die zweite Spielmaschine jeweils versehen sind mit:
der Leseeinrichtung (208), den Datenstationen (3), der Spielfortsetzungseinrichtung und der Bezahleinrichtung,
wobei
das Aufzeichnungsmedium von der Speichereinrichtung in der ersten und der zweiten Spielhallen-Spielmaschine getrennt und abgesondert ist und
die Spielfortsetzungseinrichtung der zweiten Spielmaschine den Zustand und den Verlauf des in der Speichereinrichtung gespeicherten unterbrochenen Spiels über die Kommunikationseinrichtung erhalt, wenn die Leseeinrichtung der zweiten Spielmaschine die Codeinformation auf einem entsprechenden der mit dem unterbrochenen Spiel verknüpften Aufzeichnungsmedien liest und das unterbrochene Spiel in der zweiten Spielmaschine unter Verwendung des erhaltenen Zustands und des erhaltenen Verlaufs des unterbrochenen Spiels neu beginnt.

15. Spielmaschine nach einem der Ansprüche 1 bis 14, wobei die Spielmaschine (1) des Weiteren Prüfeinrichtungen zum Prüfen der durch die Leseeinrichtung gelesenen Codeinformation umfasst.

16. Spielsystem nach einem der Ansprüche 1 bis 15, wobei die Aufzeichnungsmedien Magnetkarten sind.

## Revendications

1. Système de jeu destiné à rétribuer une valeur récréative en fonction d'une progression d'un jeu, comprenant :
une pluralité de supports d'enregistrement, chacun desdits supports d'enregistrement contenant des informations codées uniques ; et
une machine de jeu (1), lesdits supports d'enregistrement pouvant être connectés de manière amovible à ladite machine de jeu, ladite machine de jeu ayant un moyen de lecture (208) destiné à lire les informations codées dans chacun desdits supports d'enregistrement lorsque lesdits supports d'enregistrement sont couplés à ladite machine de jeu, la machine de jeu comprenant :
un moyen de stockage (207) destiné à stocker un état et un historique d'un jeu au moment de la suspension du jeu, chaque état et historique d'un jeu suspendu étant associé aux informations codées dans un respectif parmi lesdits supports d'enregistrement ;
des postes (3) destinés à accepter des opérations d'entrée de joueurs ;
un moyen de progression du jeu destiné à faire progresser un jeu conformément aux opérations d'entrée acceptées par lesdits postes ; et
un moyen de rétribution destiné à rétribuer une valeur récréative en fonction de la progression du jeu dans ledit moyen de progression du jeu,
le système de jeu étant **caractérisé en ce que** :
lesdits supports d'enregistrement sont séparés et écartés dudit moyen de stockage, et
ledit moyen de progression du jeu relance un jeu suspendu au moyen de l'état et de l'historique du jeu suspendu stocké dans ledit moyen de stockage lorsque ledit moyen de lecture lit les informations codées sur un respectif parmi lesdits supports d'enregistrement associés au jeu suspendu.

2. Système de jeu selon la revendication 1, dans lequel ladite machine de jeu (1) comprend en outre un moyen d'écriture (209) destiné à écrire des informations dans ledit support d'enregistrement,
dans lequel ledit moyen d'écriture écrit les informations spécifiant un code dans chacun desdits supports d'enregistrement au moment de la suspension du jeu.

3. Système de jeu selon la revendication 2, dans lequel ledit moyen d'écriture réécrit les informations codées dans le support d'enregistrement au moment de la suspension du jeu.

4. Système de jeu selon la revendication 2 ou 3, dans lequel ladite machine de jeu (1) comprend en outre :
un moyen de collationnement destiné à collationner les informations codées stockées dans lesdits supports d'enregistrement et dans ledit moyen de stockage ; et
un moyen de création d'informations codées destiné à créer les informations codées sur la base des informations internes dans ledit système de jeu,
dans lequel ledit moyen d'écriture (209) écrit des informations codées créées par ledit moyen de création d'informations codées dans lesdits supports d'enregistrement ; et
les informations codées créées par ledit moyen de création d'informations codées sont stockées dans ledit moyen de stockage.

5. Système de jeu selon l'une quelconque des revendications 1 à 4, dans lequel ladite machine de jeu (1) comprend en outre :
un champ de course commun destiné à faire progresser le jeu ;
lesdits postes (3) étant agencés pour accepter des opérations d'entrée d'un joueur concernant le jeu en progression dans ledit champ de course commun.

6. Système de jeu selon la revendication 5, dans lequel ledit moyen de lecture (208) est mis à disposition pour chacun desdits postes.

7. Système de jeu selon la revendication 6, dans lequel ledit moyen de stockage (207) comporte :
un premier dispositif de stockage mis à disposition pour chacun desdits postes, destiné à stocker temporairement l'état et l'historique du jeu générés en fonction des opérations d'entrée ; et
un second dispositif de stockage destiné à mettre à jour l'ancien état et l'ancien historique du jeu au moyen de l'état et de l'historique du jeu stockés dans ledit premier dispositif de stockage.

8. Système de jeu selon la revendication 7, dans lequel ledit moyen de progression du jeu lit l'état et l'historique correspondants du jeu à partir dudit second dispositif de stockage dans ledit premier dispositif de stockage sur la base des informations codées lues par ledit moyen de lecture (208), et fait progresser de manière continue le jeu au moyen de l'état et de l'historique du jeu lus dans le premier dispositif de stockage.

9. Système de jeu selon l'une quelconque des revendications 1 à 8, dans lequel l'état et l'historique du jeu comportent des dernières informations relatives au jeu concernant la dernière fois que le jeu a été joué ; et
dans lequel les états et historiques plus anciens des jeux stockés dans ledit moyen de stockage (207) ont la priorité dans un procédé d'effacement sur la base des dernières informations relatives au jeu.

10. Système de jeu selon l'une quelconque des revendications 1 à 9, dans lequel l'état et l'historique du jeu comportent des résultats d'élevage d'un animal que le joueur doit élever dans le jeu.

11. Système de jeu selon la revendication 10, dans lequel :
l'état et l'historique du jeu comportent les résultats d'élevage d'un animal que le joueur doit élever dans le jeu ; et
l'animal à élever prend part à une course dans le jeu, et l'animal montre son aptitude pendant la course en fonction des résultats d'élevage.

12. Système de jeu selon l'une quelconque des revendications 5 à 8, dans lequel :
l'état et l'historique du jeu comportent les résultats d'élevage d'un animal que le joueur doit élever dans le poste ; et
l'animal à élever prend part à une course dans le jeu sur le champ de course commun, et l'animal montre son aptitude pendant la course en fonction des résultats d'élevage.

13. Système de jeu selon la revendication 12, dans lequel l'animal à élever est un cheval de course dans le jeu, et l'animal est sélectionné pour la course sur le champ de course commun.

14. Système de jeu selon la revendication 1, comprenant :
une première machine de jeu (1) comme machine de jeu ;
une seconde machine de jeu en tant qu'autre machine de jeu ;
chacun desdits supports d'enregistrement pouvant être connecté de manière amovible auxdites première et seconde machines de jeu ;
un moyen de communication destiné à connecter ladite seconde machine de jeu et le moyen de stockage agencé dans ladite première machine de jeu,
dans lequel lesdites première et seconde machines de jeu sont prévues chacune avec :
le moyen de lecture (208) ; les postes (3) ; le moyen de progression du jeu ; et le moyen de rétribution ;
dans lequel lesdits supports d'enregistrement sont séparés et écartés dudit moyen de stockage dans lesdites première et seconde machines de jeu arcades, et
ledit moyen de progression du jeu de ladite seconde machine de jeu acquiert l'état et l'historique du jeu suspendu stockés dans ledit moyen de stockage par l'intermédiaire dudit moyen de communication lorsque ledit moyen de lecture de ladite seconde machine de jeu lit les informations codées sur un respectif parmi lesdits supports d'enregistrement associés au jeu suspendu, et relance le jeu suspendu dans ladite seconde machine de jeu au moyen de l'état et de l'historique acquis du jeu suspendu.

15. Machine de jeu selon l'une quelconque des revendications 1 à 14, ladite machine de jeu (1) comprenant en outre un moyen de vérification destiné à vérifier les informations codées lues par ledit moyen de lecture.

16. Système de jeu selon l'une quelconque des revendications 1 à 15, dans lequel les supports d'enregistrement sont des cartes magnétiques.
